# EUROPEAN PATENT SPECIFICATION

(11) **EP 0 885 778 B1**
(45) Date of publication and mention of the grant of the patent: **19.12.2001**
(21) Application number: 98303355.6
(22) Date of filing: 29.04.1998
(51) Int. Cl.: B60R 13/06, B60J 10/00

(54) **Sealing corner**
Dichtungswinkelprofil
Profil d'étanchéité d'angle

(30) Priority: 16.06.1997 GB 9712519
(43) Date of publication of application: 23.12.1998
(73) Proprietor: THE STANDARD PRODUCTS COMPANY, Cleveland Ohio 44102 (US)
(72) Inventor: Griffiths, Ivon Wayne, Huntingdon, PE 18 8XR (GB)
(74) Representative: Nash, David Allan

(56) References cited:
- US-A- 5 016 394
- US-A- 5 566 510
- PATENT ABSTRACTS OF JAPAN vol. 1996, no. 05, 31 May 1996 (1996-05-31) & JP 08 011549 A (TOYODA GOSEI CO LTD), 16 January 1996 (1996-01-16)

## Description

This invention relates to a design of sealing corner intended to serve in the corner region between the header region and a pillar region of a seal for a moving pane of glass in the window of a vehicle.

It is well known in the vehicle industry to employ seals having glass run channels, around the periphery of the window opening. Such seals normally have means, such as arms or channels, to enable the seals to be securely located on flanges or other members forming part of the window. In addition, the seals normally have a glass run channel which is defined by a base and two opposing side walls. In a typical window such as the window in the driver's door of a vehicle, the seal normally extends up the so-called A-pillar, around into the so-called header, and around into and down the B-pillar. Where there is a sharp angle involved, such as between the header and the B-pillar, it is not always practicable to rely on an extruded component. For example, if the corner region were attempted to be formed from a typical extrudate which extends along the header region or the B-pillar region, there would be considerable buckling of the extrudate in the region of such an acute angle. For this reason it is the case that sometimes a separately produced component, typically but not necessarily formed by injection moulding, is employed for the corner component, with the relatively straight runs of the sealing component along the header and up the B-pillar then abutting the moulded corner component. In many instances the sealing component is provided in the region of the glass run channel with three sealing limbs, one of which abuts the outer face of the pane of glass, another of which abuts the inner face of the pane of glass, and the third of which abuts the edge region of the pane of glass.

Attempts have been made to employ sealing components with three such limbs in the region of the corner, but particular difficulties can be experienced which result in unsatisfactory sealing characteristics as the seals do not make a firm contact with the opposing faces of the glass.

According to the present invention, there is provided a sealing corner for a glass run channel, the corner being intended to serve as part of a sealing system when located between an extruded sealing member at a header and an extruded sealing member at a pillar, the sealing corner being moulded and capable of being joined to the two extrudates and having a glass run channel with a base and two opposing side walls, with a hammock extending between the base and that side wall which is to be on the exterior of the vehicle whereby, in use, with the glass in the glass run channel, the edge region of the glass acts on the hammock and draws in the opposing side walls into good engagement with the glass.

Another aspect of the present invention provides a sealing system having a sealing corner in accordance with the first-mentioned aspect of the present invention and, joined at the opposite ends thereof, two extrudates intended to serve as a header section and a pillar section.

A further aspect of the present invention provides a sealing system which comprises joined in line in the following order the following: a sealing component intended to serve as a first pillar, a first sealing corner in accordance with the first-mentioned aspect of the present invention, a sealing component intended to serve as a header, a second sealing corner in accordance with the first-mentioned aspect of the present invention, and a sealing component intended to function as a second pillar.

In the sealing corner of the present invention there is preferably also a limb on that opposing side wall of a glass run channel intended to be located on the inside of the glass and to abut the inner face of the glass, in use.

The sealing corner of the present invention can have other regions intended to enable the sealing corner to be sealingly secured to metal components which make up the window frame.

For a better understanding of the present invention, and to show how the same may be carried into effect, reference will now be made, by way of example, to the accompanying drawings in which:
Figure 1 is a side view looking towards part of a sealing system from the outside of a vehicle, the illustrated part showing one embodiment of a sealing corner in accordance with the present invention;
Figure 2 is a section through the header component, taken along the line II-II in Figure 1; and
Figure 3 is a section through the sealing corner, taken along the line III-III in Figure 1.

Referring to the drawings, there is shown a moulded corner seal generally indicated by the reference numeral 1, to one end which is secured an extrudate 2 serving as the header component, and to other end of which is secured an extrudate 3 serving as a pillar component. There is thus a boundary 4 between the corner seal 1 and the header 2, and a boundary 5 between the corner seal 1 and the pillar component 3.

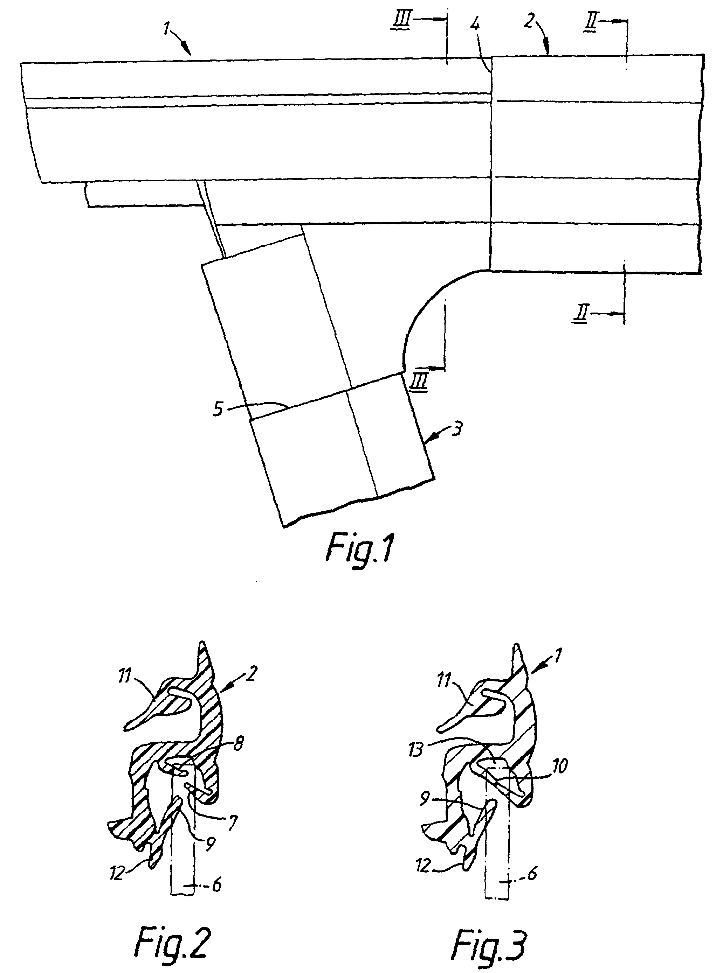

In Figure 2 the seal 2 is shown in relation to the sheet of glass 6. The seal has a channel in which are located an outer glass sealing limb 7, a glass edge sealing limb 8, and an inner glass sealing limb 9. Other regions 11 and 12 of the seal 2 are provided for the purpose of securing the seal 2 to flanges and the like, forming part of the window frame.

Turning now to the corner seal 1, as can be seen in Figure 3 the seal has regions 11 and 12 intended to enable the seal to be secured to flanges or the like, and the seal also has the inner glass sealing limb 9, like the seal 2. The significant difference, however, is that, instead of the limbs 7 and 8 as shown in the header seal 2, there is a hammock 10 similar in appearance to the seals 7 and 8 being joined end to end, but different in function, in that with the glass being moved into the corner the edge of the glass abuts the hammock 10 and pulls in the opposing sides walls of the seal in order to provide a good seal.

A convenient way of producing the sealing corner is to produce it by moulding in a mould, with adjacent end regions of other seal components abutting the zones where the sealing corner is to be formed.

There is a void 13 behind the hammock 10 and, in practice, this is formed by the provision within the mould of a core which, once the corner seal has been formed and the whole seal removed from the mould, is itself removed from the corner seal by sliding it along the seal and out between the limbs of an adjacent region of the seal (e.g. the header region).

As the main thrust of the present invention is the provision of the hammock in the corner seal, it will be appreciated that other illustrated features of the corner seal, such as the different components for locating the corner seal relative to the window frame, may be varied considerably.

## Claims

1. Sealing corner (1) for a glass run channel, the corner being intended to serve as part of a sealing system when located between an extruded sealing member (2) at a header and an extruded sealing member (3) at a pillar, the sealing corner being moulded and capable of being joined to the two extrudates and having a glass run channel with a base and two opposing side walls, with a hammock (10) extending between the base and that side wall which is to be on the exterior of the vehicle whereby, in use, with the glass (6) in the glass run channel, the edge region of the glass acts on the hammock and draws in the opposing side walls into good engagement with the glass.

2. A sealing corner (1) according to Claim 1, which also includes a limb (9) on that opposing side wall of a glass run channel intended to be located on the inside of the glass (6) and to abut the inner face of the glass, in use.

3. A sealing corner (1) according to Claim 1 or 2, which includes other regions (11, 12) intended to enable the sealing corner to be sealingly secured to metal components which make up the window frame.

4. A sealing system having a sealing corner (1) in accordance with Claim 1, 2 or 3, and, joined at the opposite ends thereof, two extrudates intended to serve as a header section and a pillar section.

5. A sealing system which comprises joined in line in the following order the following: a sealing component intended to serve as a first pillar, a first sealing corner (1) in accordance with Claim 1, 2 or 3, a sealing component intended to serve as a header, a second sealing corner (1) in accordance with Claim 1, 2 or 3, and a sealing component intended to function as a second pillar.

## Patentansprüche

1. Dichtungswinkelprofil (1) für einem Glaslaufkanal, welches als Teil eines Dichtungssystems dienen soll, wenn es sich zwischen einem extrudierten Dichtungsglied (2) an einem Oberteil und einem extrudierten Dichtungsglied (3) an einer Säule befindet, und welches geformt und in der Lage ist, mit den beiden Extrudaten verbunden zu werden, sowie ein Glaslaufkanal mit einer Basis und zwei einander gegenüberliegenden Seitenwänden, wobei sich ein Hängeabschnitt zwischen der Basis und derjenigen Seitenwand erstreckt, welche sich auf der Außenseite des Fahrzeugs befinden soll, wodurch, bei Verwendung, mit dem Glas (6) in dem Glaslaufkanal der Kantenbereich des Glases auf den Hängeabschnitt einwirkt und die einander gegenüberliegenden Seitenwände in guten Eingriff mit der Glasscheibe nach innen zieht.

2. Dichtungswinkelprofil (1) nach Anspruch 1, welches auch einen Schenkel (9) an der gegenüberliegenden Seitenwand eines Glaslaufkanals enthält, welche auf der Innenseite des Glases (6) liegen und, bei Verwendung, an der Innenseite des Glases anliegen soll.

3. Dichtungswinkelprofil (1) nach Anspruch 1 oder 2, welches andere Bereiche (11, 12) enthält, welche ermöglichen sollen, dass das Dichtungswinkelprofil dichtend an Metallbauteilen, welche den Fensterrahmen bilden, befestigbar ist.

4. Dichtungssystem mit einem Dichtungswinkelprofil (1) nach Anspruch 1, 2 oder 3, und zwei, an dessen einander gegenüberliegenden Enden verbunden, Extrudaten, welche als Oberteilabschnitt und Säulenabschnitt dienen sollen.

5. Dichtungssystem, welches, in der folgenden Reihenfolge miteinander verbunden, das Folgende enthält: ein Dichtungsbauteil, welches als eine erste Säule dienen soll, ein erstes Dichtungswinkelprofil (1) nach Anspruch 1, 2 oder 3, ein Dichtungsbauteil, welches als Oberteil dienen soll, ein zweites Dichtungswinkelprofil (1) nach Anspruch 1, 2 oder 3, und ein Dichtungsbauteil, welches als zweite Säule dienen soll.

## Revendications

1. Coin d'étanchéité (1) destiné à un canal de déplacement de vitrage, le coin étant destiné à être utilisé comme partie d'un système d'étanchéité lorsqu'il est placé entre un organe extrudé d'étanchéité (2) dans une partie de tête et un organe extrudé d'étanchéité (3) dans une partie de pied, le coin d'étanchéité étant moulé et pouvant être raccordé aux deux profilés et ayant un canal de passage de vitrage qui a une base et deux parois latérales opposées, avec une partie suspendue (10) qui s'étend entre la base et la paroi latérale qui doit se trouver à l'extérieur du véhicule, si bien que, pendant l'utilisation, lorsque le vitrage (6) est dans le canal de passage de vitrage, la région de bord du vitrage agit sur la partie suspendue et tire vers l'intérieur les parois latérales opposées afin qu'elles soient en contact intime avec le vitrage.

2. Coin d'étanchéité (1) selon la revendication 1, qui comprend aussi une branche (9) à la paroi latérale opposée du canal de passage de vitrage, destinée à être placée à l'intérieur du vitrage (6) et à être en butée contre la face interne du vitrage pendant l'utilisation.

3. Coin d'étanchéité (1) selon la revendication 1 ou 2, qui comprend d'autres régions (11, 12) destinées à permettre une fixation étanche du coin d'étanchéité aux éléments métalliques qui constituent le cadre de la fenêtre.

4. Système d'étanchéité possédant un coin d'étanchéité (1) selon la revendication 1, 2 ou 3, et, raccordés à ses extrémités opposées, deux profilés destinés à être utilisés comme tronçon de la partie de tête et tronçon d'une partie de pied.

5. Système d'étanchéité qui comporte, raccordé sous forme alignée dans l'ordre suivant : un élément d'étanchéité destiné à être utilisé comme premier pied, un premier coin d'étanchéité (1) selon la revendication 1, 2 ou 3, un élément d'étanchéité destiné à être utilisé comme organe de tête, un second coin d'étanchéité (1) selon la revendication 1, 2 ou 3, et un élément d'étanchéité destiné à être utilisé comme second pied.
